# EUROPEAN PATENT APPLICATION

(11) **EP 2 063 569 A1**
(43) Date of publication of application: **27.05.2009**
(21) Application number: 07785441.2
(22) Date of filing: 23.08.2007
(51) Int. Cl.: H04L 12/24

(54) **METHOD AND SYSTEM FOR PROTECTION REVERSE POLICY**

(30) Priority: 12.01.2007 CN 200710000850
(71) Applicant: Huawei Technologies Co., Ltd., Longgang District, Shenzhen Guangdong 518129 (CN)
(72) Inventor: YANG, Yang, Guangdong 518129 (CN); DONG, Jixiong, Guangdong 518129 (CN); ZHANG, Haiyan, Guangdong 518129 (CN)
(74) Representative: Thun, Clemens
(86) International application number: PCT/CN2007/070544
(87) International publication number: WO 2008/083565

(57) **Abstract**

A method for protection switching decision includes: performing performance monitoring and failure detection on a first transmitting entity that transmits services; performing performance monitoring and failure detection on a second transmitting entity that does not transmit services; and making protection switching decision according to the performance monitoring and failure detection results of the first transmitting entity and second transmitting entity. A system for performance monitoring is also disclosed. In embodiments of the present invention, performance monitoring can be performed on the transmitting entity that does not transmit services, thus avoiding invalid switching of services and improving the quality of services.

## Description

### Field of the Invention

The present invention relates to communication technologies, and in particular, to a method and system for protection switching decision.

### Background of the Invention

In a communication system, the working status of the system should be detected. For example, in a packet network, transmitting entities always transmit continuity check packets. Based on whether the egress node receives the continuity check packets within the preset time, failure detection is performed on transmitting entities to determine whether signal failure (SF) occurs. If transmitting entities transmit service packets, performance monitoring, for example, packet loss rate monitoring, can be performed to determine whether signal degradation (SD) occurs according to service packets.

In the prior art, performance monitoring on transmitting entities can be performed only when the transmitting entities are transmitting service packets. Performance monitoring is impossible when transmitting entities do not transmit service packets.

In a communication system, when SF or SD occurs on the transport network nodes or links, protection switching is needed, that is, services on a path where SF or SD occurs are switched to a predetermined standby path for transmission, thus ensuring normal transmission of services.

Protection switching is categorized into 1+1 protection, 1: n protection, and m: n protection. In 1: n protection mode, n (n≥1) working transmitting entities share the same protection transmitting entity, that is, only one normal service can be protected at a time. Generally, the working transmitting entities transmit normal services, and the protection transmitting entity transmits extra services or does not transmit services. When SF or SD is detected on a working transmitting entity, the ingress node and egress node for transmitting normal services on the working transmitting entity are switched to the protection transmitting entity. In this event, if the protection transmitting entity originally transmits an extra service, the extra service is blocked.

Service switching is completed by the bridges on ingress nodes and the selectors on egress nodes. A selective bridge or a broadcast bridge can be used on an ingress node.

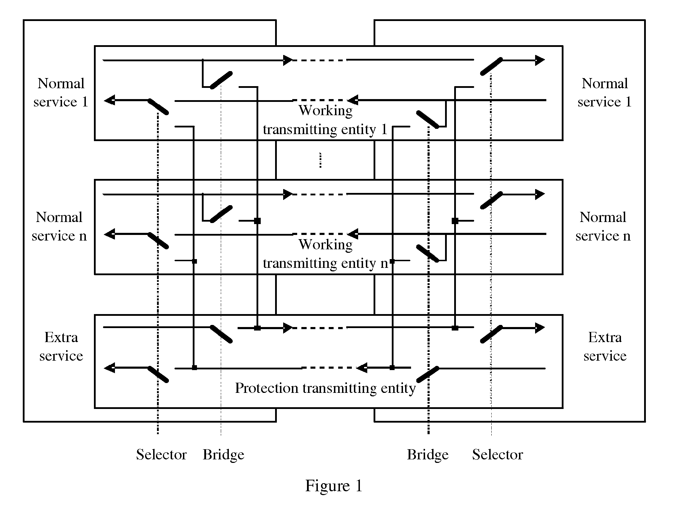

Figure 1 shows a 1: n protection switching system that uses broadcast bridges on the ingress nodes.

When the working transmitting entity works properly, the ingress node transmits a normal service through the bridge to the working transmitting entity for transmission, and the egress node receives the normal service from the working transmitting entity through the selector. In this event, the protection transmitting entity may or may not transmit an extra service. If an extra service is transmitted, the ingress node transmits the extra service through the bridge to the protection transmitting entity. The egress node receives the extra service from the protection transmitting entity through the selector.

When SF or SD is detected on the working transmitting entity, but no exception is detected on the protection transmitting entity, the ingress node transmits the normal service through the bridge to both the working transmitting entity and protection transmitting entity for transmission. In this event, if the protection transmitting entity is transmitting an extra service, the ingress node needs to block the transmission of the extra service. The detection on the working transmitting entity includes: the egress node performs failure detection on the working transmitting entity to determine whether SF occurs; or, the egress node performs performance monitoring on the working transmitting entity to determine whether SD occurs. The egress node receives the normal service from the protection transmitting entity through the selector. After that, protection switching is complete.

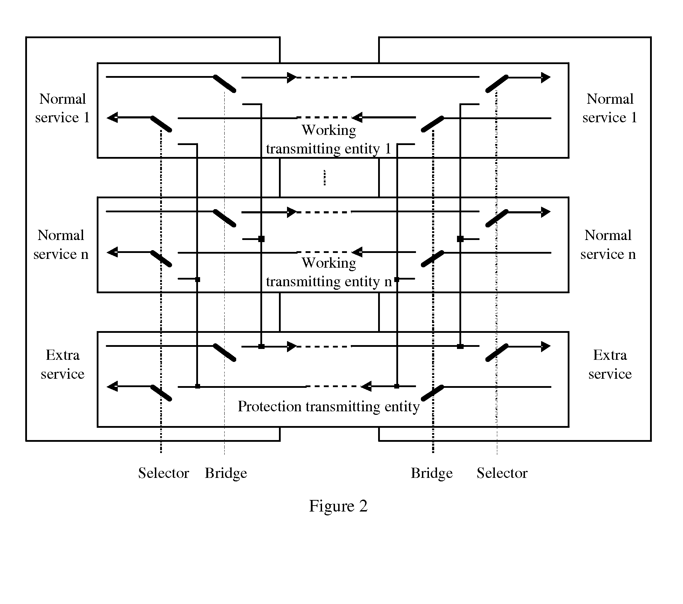

Figure 2 shows a 1: n protection switching system that uses selective bridges on the ingress nodes.

When the working transmitting entity works properly, the ingress node transmits a normal service through the bridge to the working transmitting entity for transmission, and the egress node receives the normal service from the working transmitting entity through the selector. In this event, the protection transmitting entity may or may not transmit an extra service. If an extra service is transmitted, the ingress node transmits the extra service through the bridge to the protection transmitting entity for transmission. The egress node receives the extra service from the protection transmitting entity through the selector.

When SF or SD is detected on the working transmitting entity, but no SF or SD is detected on the protection transmitting entity, the ingress node switches the normal service previously transmitted by the working transmitting entity to the protection transmitting entity for transmission. In this event, if the protection transmitting entity is transmitting an extra service, the ingress node needs to block the transmission of the extra service. The egress node receives the normal service from the protection transmitting entity through the selector. After that, protection switching is complete.

The performance monitoring in the prior art can be performed only when service packets are transmitted on the transmitting entity. Therefore, when protection switching is performed in a 1: n protection switching system, if the protection transmitting entity or the working transmitting entity does not transmit an extra service, performance monitoring cannot be performed on the protection transmitting entity or working transmitting entity. The following problems may occur:

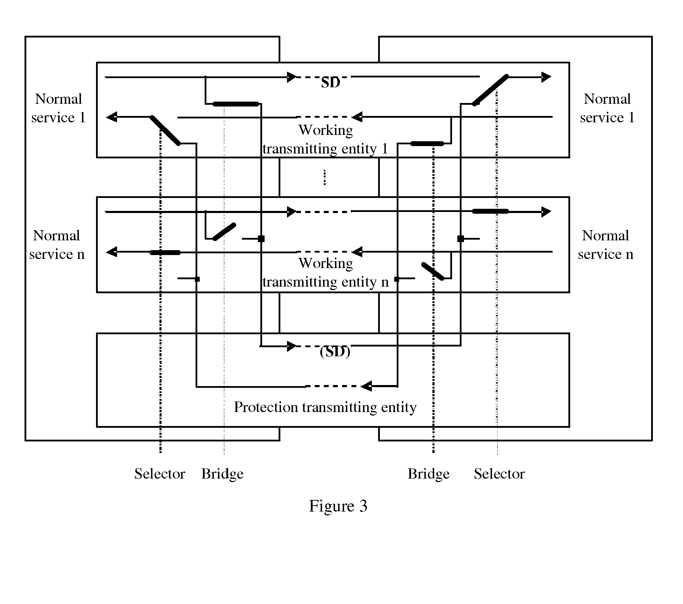

Suppose that a broadcast bridge is used on the ingress node. SD occurs on both the working transmitting entity and the protection transmitting entity, and SD is detected on the working transmitting entity only. Because the protection transmitting entity does not transmit an extra service, performance monitoring cannot be performed on the protection transmitting entity. Even though SD occurs, the protection transmitting entity is regarded as normal. If no SF is detected on the protection transmitting entity, protection switching is triggered. As shown in Figure 3, if the normal service is switched to the protection transmitting entity when the protection transmitting entity has more serious performance degradation than the working transmitting entity, invalid service switching occurs. This further decreases the quality of service.

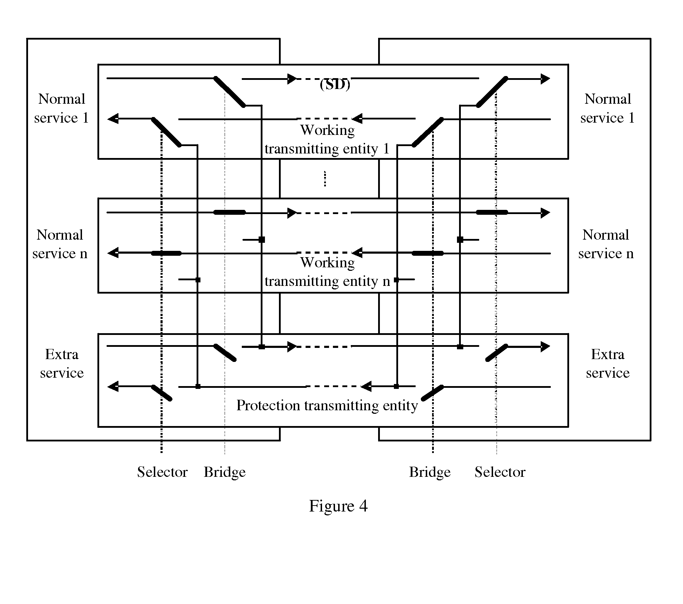

Suppose that a selective bridge is used on the ingress node. In addition to the defects incurred when the broadcast bridge is used, when revertive protection switching is used, the normal service may be switched back to the working transmitting entity from the protection transmitting entity. As a result, the normal service is switched between the working transmitting entity and the protection transmitting entity frequently. For example, if SF or SD occurs on the working transmitting entity, and protection switching is triggered, the ingress node only switches the normal service through the bridge to the protection transmitting entity for transmission. Because no service is transmitted on the working transmitting entity, performance monitoring cannot be performed on the working transmitting entity. Even though SD occurs, the working transmitting entity is regarded as normal. After the normal service is switched back to the working transmitting entity, however, SD can be detected on the working transmitting entity. When SD is detected on the working transmitting entity, the normal service is switched to the protection transmitting entity, as shown in Figure 4. Thus, the normal service is frequently switched between the working transmitting entity and the protection transmitting entity. This greatly decreases the quality of service and increases the system load.

### Summary of the Invention

An embodiment of the present invention provides a method and system for protection switching decision to prevent invalid switching of services and improve the quality of services.

A method for protection switching decision applied in 1: n protection switching technology includes:
performing performance monitoring and failure detection on a first transmitting entity that transmits services;
performing performance monitoring and failure detection on a second transmitting entity that does not transmit services; and
making protection switching decision according to results of the performance monitoring and failure detection on the first and second transmitting entities.

A system for protection switching decision applied in 1: n protection switching technology includes:
a first transmitting entity that transmits services and a second transmitting entity that does not transmit services; and
a switching decision module, adapted to perform failure detection and performance monitoring on the first and second transmitting entities, and make protection switching decision according to performance monitoring and failure detection results.

According to the foregoing solution, when the 1: n switching technology is applied in protection switching, performance monitoring is performed on the transmitting entity that does not transmit services through test packets, or through continuity check packets, or based on the performance monitoring result of an equivalent transmitting entity that has the same path as the transmitting entity that does not transmit services. In this way, performance monitoring can be performed on a transmitting entity even when the transmitting entity does not transmit services, thus avoiding invalid switching of services and improving the quality of services.

### Brief Description of the Drawings

Figure 1 shows a 1: n protection switching system that uses broadcast bridges in the prior art;

Figure 2 shows a 1: n protection switching system that uses selective bridges in the prior art;

Figure 3 shows the transmission of services when broadcast bridges are used in the prior art, and SD occurs on the working transmitting entity and protection transmitting entity;

Figure 4 shows the transmission of services after protection switching when selective bridges are used in the prior art;

Figure 5 shows the transmission of services before protection switching when broadcast bridges are used according to an embodiment of the present invention;

Figure 6 shows the transmission of services after protection switching when broadcast bridges are used according to an embodiment of the present invention;

Figure 7 shows the transmission of services before protection switching when selective bridges are used according to an embodiment of the present invention;

Figure 8 shows the transmission of services after protection switching when selective bridges are used according to an embodiment of the present invention; and

Figure 9 shows the composition of a system for protection switching decision according to an embodiment of the present invention.

### Detailed Description of the Embodiments

According to an embodiment of the present invention, when the 1: n switching technology is applied in protection switching, performance monitoring is performed on a transmitting entity that does not transmit services through test packets, or through continuity check packets, or based on the performance monitoring result of an equivalent transmitting entity that has the same path as the transmitting entity that does not transmit services. In this way, performance monitoring can be performed on the transmitting entity even when it does not transmit services.

The method for protection switching decision provided in an embodiment of the present invention is hereinafter described in detail.

When the performance monitoring method in an embodiment of the present invention is applied in 1: n protection switching, a method for protection switching decision includes:
transmitting normal services on the working transmitting entity and performing performance monitoring on the transmitting entity through the transmitted normal services;
performing performance monitoring on the protection transmitting entity that does not transmit services through test packets, or through continuity check packets, or based on the performance monitoring result of an equivalent transmitting entity that has the same path as the protection transmitting entity; and
performing performance monitoring on the protection transmitting entity that transmits an extra service through the transmitted extra service according to the prior art.

The foregoing performance monitoring results are part of a basis for protection switching decision.

Through the foregoing performance monitoring, whether SD occurs on transmitting entities can be determined. Further, in this embodiment, failure detection can be performed on the working transmitting entity and protection transmitting entity through continuity check packets, so as to determine whether SF occurs.

Protection switching depends on the performance monitoring result and failure detection result. Protection switching is triggered when SF or SD occurs on the working transmitting entity while the protection transmitting entity is normal; or protection switching is triggered when SF occurs on the working transmitting entity while SD occurs on the protection transmitting entity; or protection switching is triggered when SD occurs on the working transmitting entity and protection transmitting entity, and the working transmitting entity has more serious performance degradation than the protection transmitting entity.

The performance monitoring parameters obtained during performance monitoring include delay, jitter, throughput, and packet loss rate. For example, if SD occurs on both the working transmitting entity and the protection transmitting entity due to packet loss, protection switching is triggered when the packet loss rate of the working transmitting entity is higher than that of the protection transmitting entity.

In this embodiment, when a broadcast bridge is used on the ingress node, the working transmitting entity and protection transmitting entity both transmit normal services, and performance monitoring can be performed on the working transmitting entity and protection transmitting entity through the transmitted normal services after protection switching. When a selective bridge is used on the ingress node, normal services are switched from the working transmitting entity to the protection transmitting entity, and performance monitoring can be performed on the protection transmitting entity through the transmitted normal services after protection switching. When the working transmitting entity transmits an extra service, performance monitoring can be performed on the working transmitting entity through the transmitted extra service. When the working transmitting entity does not transmit any extra service, performance monitoring can be performed on the working transmitting entity through test packets, or through continuity check packets, or based on the performance monitoring result of an equivalent transmitting entity that has the same path as the working transmitting entity.

In this embodiment, if the working transmitting entity transmits an extra service after protection switching, the extra service may be the same as or different from that transmitted by the protection transmitting entity before protection switching.

The method for protection switching decision provided in this embodiment may further include: restoring the system to the status before switching and switching the normal services from the protection transmitting entity to the working transmitting entity when switching recovery is required according to the performance monitoring result after switching and the ongoing failure detection result.

In this embodiment, the performance monitoring based on test packets or continuity check packets is the same as that based on normal services, and the performance monitoring should be also based on performance monitoring packets. Supposing performance monitoring is performed on the protection transmitting entity through continuity check packets, the packet loss rate on the protection transmitting entity, for example, may be monitored and calculated according to the number of the continuity check packets transmitted on the ingress node and the number of the continuity check packets received on the egress node.

During the performance monitoring based on performance monitoring packets, a test diagram can be generated according to the actual services to be transmitted on the working transmitting entity or the protection transmitting entity. If the packets transmitted have the same size as the packets of actual services, the accuracy of performance monitoring can be improved.

The embodiments of the present invention are hereinafter described in detail according to scenarios where a broadcast bridge or a selective bridge is used on the ingress node.

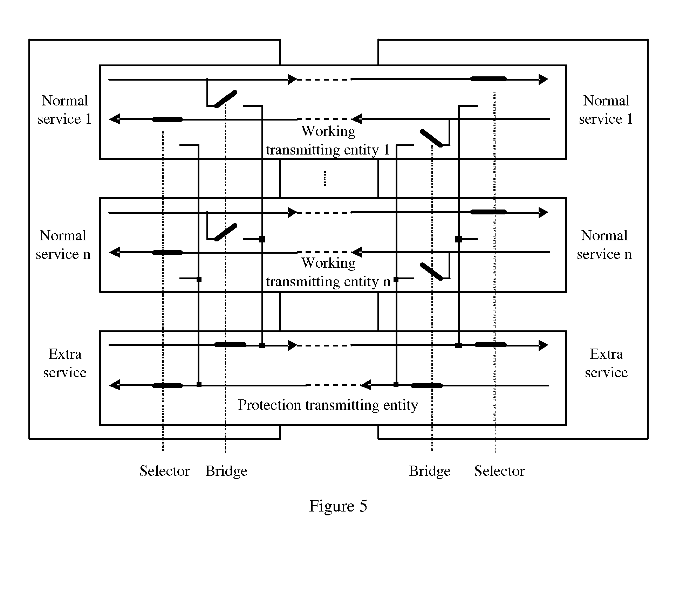

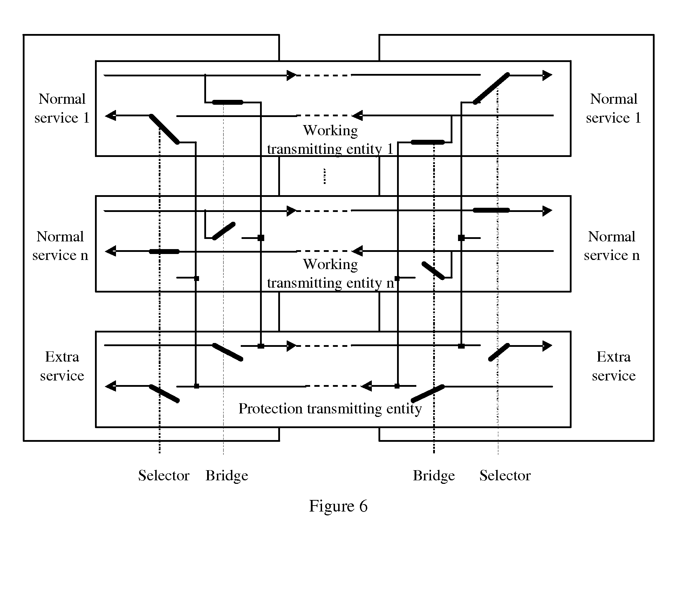

Figure 5 and Figure 6 show a scenario where a broadcast bridge is used on the ingress node to implement 1: n protection in a packet network.

As shown in Figure 5, before protection switching, each working transmitting entity transmits its normal service. Failure detection is performed on the working transmitting entity through continuity check packets to determine whether SF occurs. Performance monitoring is performed on the working transmitting entity through the normal service transmitted by the working transmitting entity to determine whether SD occurs.

On the protection transmitting entity, failure detection can be performed through continuity check packets to determine whether SF occurs. When the protection transmitting entity transmits an extra service, performance monitoring can be based on the extra service to determine whether SD occurs. When the protection transmitting entity does not transmit any extra service, performance monitoring can be performed in three modes: i) transmitting test packets on the protection transmitting entity, where, test packets are those defined in the operations, administration and maintenance (OAM) mechanism; ii) keeping transmitting continuity check packets; and iii)using the performance monitoring result of an equivalent transmitting entity that has the same path as the protection transmitting entity as the performance monitoring result of the protection transmitting entity and obtaining the performance parameters of the protection transmitting entity. The same path herein means that the nodes and links between the ingress and egress nodes of the equivalent transmitting entity are the same as those between the ingress and egress nodes of the protection transmitting entity.

The above are the modes of service transmission, performance monitoring, and failure detection on the working transmitting entity and protection transmitting entity when no SF or SD occurs on the working transmitting entity. Protection switching depends on the failure detection and performance monitoring results.

Protection switching is required in three cases:

(1) SF and/or SD occurs on one working transmitting entity while no SF or SD occurs on the protection transmitting entity, as determined according to the failure detection result or performance monitoring result.

(2) SF occurs on one working transmitting entity while only SD occurs on the protection transmitting entity.

(3) Only SD occurs on one working transmitting entity and the protection transmitting entity, and the working transmitting entity has more serious performance degradation than the protection transmitting entity. The performance monitoring parameters obtained during performance monitoring include delay, jitter, or packet loss rate. Whether the working transmitting entity has more serious performance degradation than the protection transmitting entity may be determined through comparison of these parameters.

During actual application of the present invention, protection switching may be performed only in the preceding first case, or only in the preceding first and second cases.

As shown in Figure 6, after protection switching is triggered, through the selector and bridge, the ingress node transmits the normal services previously transmitted on the working transmitting entity where SF or SD occurs, to both the working transmitting entity and the protection transmitting entity for transmission, while the egress node receives the normal services from the protection transmitting entity. In this event, if the protection transmitting entity originally transmits extra services or test packets, the transmission stops. If performance monitoring is performed on the protection transmitting entity through continuity check packets before protection switching, performance monitoring in this mode stops. If the performance parameters of an equivalent transmitting entity with the same path are obtained before protection switching, obtaining the performance parameters stops. Performance monitoring on the working transmitting entity or protection transmitting entity is performed before the services reach the selector of the egress node. Therefore, performance monitoring can be performed on the protection transmitting entity and working transmitting entity through the transmitted normal services.

If protection switching is not required as determined according to failure detection and performance monitoring results, switching recovery may be triggered to restore the service transmission mode, failure detection mode, and performance monitoring mode on the transmitting entity to the original modes before switching protection, as shown in Figure 5.

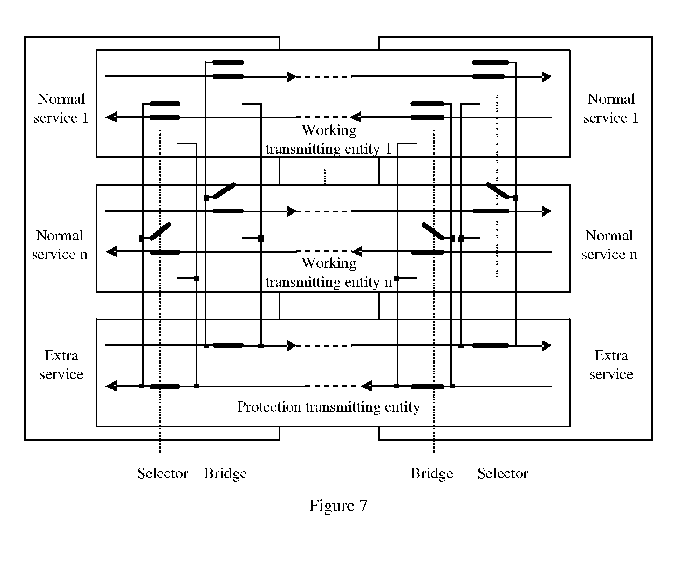

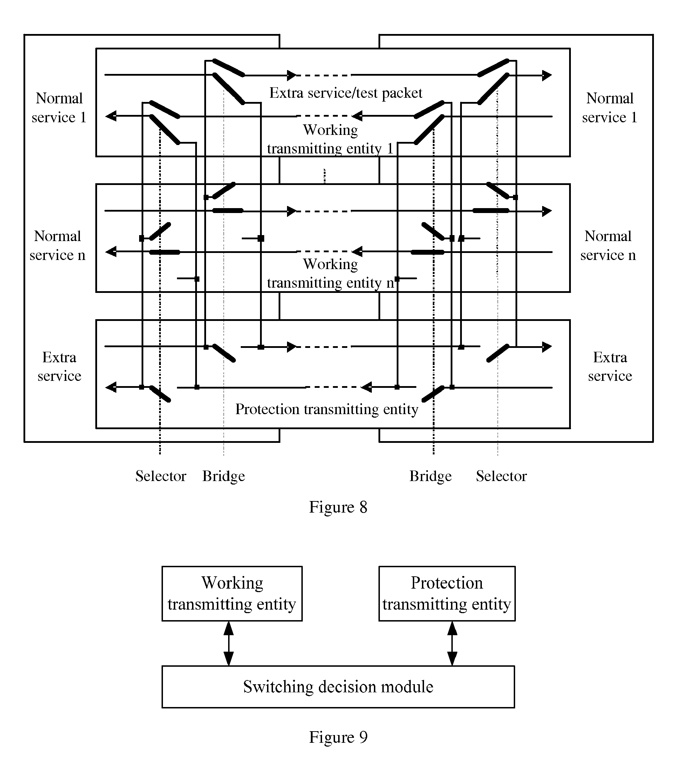

Figure 7 and Figure 8 show a scenario where a selective bridge is used on the ingress node to implement 1: n protection in a packet network.

Figure 7 shows service transmission on each transmitting entity before protection switching. As shown in Figure 7, each working transmitting entity transmits its normal service, failure detection is performed on the working transmitting entity through continuity check packets, and performance monitoring is performed on the working transmitting entity through the transmitted normal services.

On the protection transmitting entity, failure detection is performed through continuity check packets. When the protection transmitting entity transmits an extra service, performance monitoring can be performed through the extra service.

When the protection transmitting entity does not transmit any extra service, performance monitoring can be performed in three modes: i) transmitting test packets on the protection transmitting entity, where, test packets are those defined in the OAM mechanism; ii) keeping transmitting continuity check packets; and iii) using the performance monitoring result of an equivalent transmitting entity that has the same path as the protection transmitting entity as the performance monitoring result of the protection transmitting entity and obtaining the performance parameters of the protection transmitting entity. The same path herein means that the nodes and links between the ingress and egress nodes of the equivalent transmitting entity are the same as those between the ingress and egress nodes of the protection transmitting entity.

The above are the service transmission modes, failure detection mode and performance monitoring mode of the working transmitting entity or protection transmitting entity when no SF or SD occurs on the working transmitting entity. Whether protection switching is required depends on the failure detection and performance monitoring results. The determination methods are the same as those used when a broadcast bridge is used.

As shown in Figure 8, after protection switching, through the selector or bridge, the ingress node switches the normal services previously transmitted on the working transmitting entity where SF or SD occurs, to the protection transmitting entity for transmission, and the egress node receives the normal services from the protection transmitting entity. In this event, if the protection transmitting entity originally transmits extra services or test packets, the transmission stops. If performance monitoring is performed on the protection transmitting entity through continuity check packets before protection switching, performance monitoring in this mode stops. If the performance parameters of an equivalent transmitting entity with the same path are obtained before protection switching, obtaining performance parameters stops. Performance monitoring can be performed on the protection transmitting entity through the transmitted normal services.

As shown in Figure 8, the ingress node performs failure detection on the working transmitting entity where SF or SD occurs. Further, when the working transmitting entity transmits an extra service, performance monitoring can be performed on the working transmitting entity through the transmitted extra service. When the working transmitting entity does not transmit any extra service, it transmits test packets, and performance monitoring can be performed through the test packets, or through the existing continuity check packets, or based on the performance parameters of the working transmitting entity obtained through the performance monitoring on an equivalent transmitting entity that has the same path as the working transmitting entity.

If the working transmitting entity transmits an extra service, the extra service may be switched from the protection transmitting entity to the working transmitting entity or may be another extra service directly transmitted on the working transmitting entity.

If protection switching is not required as determined according to failure detection and performance monitoring results, switching recovery may be triggered to restore the service transmission mode, failure detection mode, and performance monitoring mode to the original modes before switching protection.

In the foregoing embodiments, failure detection, performance monitoring, and determination of protection switching and recovery are performed on the ingress node and/or egress node.

A method for protection switching decision has been described above with reference to embodiments. A system for protection switching decision provided by the present invention is hereinafter described in detail with reference to some embodiments.

Figure 9 shows the composition of a system for protection switching decision according to an embodiment of the present invention. The system includes: a working transmitting entity, a protection transmitting entity, and a switching decision module.

The switching decision module performs performance monitoring on the working transmitting entity according to the transmitted normal services. When the protection transmitting entity does not transmit any extra service, performance monitoring can be performed through test packets, or through existing continuity check packets, or based on the performance monitoring result of an equivalent transmitting entity that has the same path as the protection transmitting entity.

The preceding performance monitoring results are used as part of the basis for protection switching decision. The switching decision module makes protection switching decision according to performance monitoring and failure detection results. When protection switching is required, the switching decision module switches the normal services from the working transmitting entity to the protection transmitting entity.

The switching decision module may be deployed on the ingress node and/or egress node.

When a broadcast bridge is used on the ingress node, both the working transmitting entity and the protection transmitting entity transmit normal services after protection switching.

The switching decision module performs performance monitoring on the protection transmitting entity and working transmitting entity according to the transmitted normal services, and performs failure detection through continuity check packets. If switching recovery is required as determined according to failure detection and performance monitoring results, the switching decision module restores the system to the status before switching.

When a selective bridge is used on the ingress node, the protection transmitting entity transmits normal services only after protection switching.

The switching decision module performs performance monitoring on the protection transmitting entity according to the transmitted normal services, and performs failure detection on the protection transmitting entity and working transmitting entity through continuity check packets.

When the working transmitting entity transmits an extra service, the switching decision module performs performance monitoring on the working transmitting entity through the transmitted extra service. When the working transmitting entity does not transmit any extra service, the switching decision module performs performance monitoring on the working transmitting entity through test packets, or through existing continuity check packets, or based on the performance monitoring result of an equivalent transmitting entity that has the same path as the working transmitting entity.

According to failure detection and performance monitoring results, the switching decision module restores the system to the status before switching and switches normal services from the protection transmitting entity to the working transmitting entity when switching recovery is required.

The switching control modules include the bridge on the ingress node and the selector on the egress node. The bridge on the ingress node may be a broadcast bridge or a selective bridge.

The embodiments described above are only exemplary ones of the invention, and are not meant to limit the scope of protection of the invention. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for protection switching decision applied in 1: n protection switching technology, comprising:
performing performance monitoring and failure detection on a first transmitting entity that transmits services;
performing performance monitoring and failure detection on a second transmitting entity that does not transmit services; and
making protection switching decision according to results of the performance monitoring and failure detection on the first and second transmitting entities.

2. The method of claim 1, wherein the performance monitoring on the second transmitting entity comprises: transmitting test packets on the second transmitting entity and performing performance monitoring on the second transmitting entity through the transmitted test packets.

3. The method of claim 1, wherein the performance monitoring on the second transmitting entity comprises: transmitting continuity check packets on the second transmitting entity and performing performance monitoring on the second transmitting entity through the transmitted continuity check packets.

4. The method of claim 1, wherein the performance monitoring on the second transmitting entity comprises: performing performance monitoring on an equivalent transmitting entity that has a same path as the second transmitting entity; obtaining a performance monitoring result; and using the result as a performance monitoring result of the second transmitting entity.

5. The method of any of claims 1 to 4, wherein the making protection switching decision according to the performance monitoring and failure detection results comprises:
determining whether signal degradation (SD) occurs on the first and second transmitting entities according to the performance monitoring results of the first and second transmitting entities;
determining whether signal failure (SF) occurs on the first and second transmitting entities according to the failure detection results of the first and second transmitting entities; and
determining whether protection switching is required according to whether SD or SF occurs on the first and second transmitting entities.

6. The method of claim 5, wherein the first transmitting entity is a working transmitting entity, the second transmitting entity is a protection transmitting entity, and services are switched from the working transmitting entity to the protection transmitting entity.

7. The method of claim 6, further comprising:
after services are switched from the working transmitting entity to the protection transmitting entity, transmitting extra services on the working transmitting entity; performing performance monitoring on the working transmitting entity according to the transmitted extra services.

8. The method of claim 6, wherein the determining whether protection switching is required according to the SD or SF status of the first and second transmitting entities comprises:
determining no protection switching when no SF or SD occurs on the first transmitting entity; and
determining protection switching when the status of the second transmitting entity is better than that of the first transmitting entity.

9. The method of claim 8, wherein the determining protection switching when the status of the second transmitting entity is better than that of the first transmitting entity comprises:
determining protection switching when SF or SD occurs on the first transmitting entity but no SF or SD occurs on the second transmitting entity.

10. The method of claim 8, wherein the determining protection switching when the status of the second transmitting entity is better than that of the first transmitting entity comprises:
determining protection switching when SF occurs on the first transmitting entity but SD occurs on the second transmitting entity.

11. The method of claim 8, wherein the determining protection switching when the status of the second transmitting entity is better than that of the first transmitting entity comprises:
determining protection switching when only SD occurs on the first and second transmitting entities, and the first transmitting entity has more serious performance degradation than the second transmitting entity.

12. The method of any one of claims 1 to 4, wherein the first transmitting entity is a working transmitting entity, the second transmitting entity is a protection transmitting entity, and services are switched back from the protection transmitting entity to the working transmitting entity.

13. A system for protection switching decision applied in 1: n protection switching technology, comprising:
a first transmitting entity that transmits services and a second transmitting entity that does not transmit services; and
a switching decision module, adapted to perform failure detection and performance monitoring on the first and second transmitting entities, and make protection switching decision according to failure detection and performance monitoring results.

14. The system of claim 13, wherein the switching decision module comprises:
a first sub-module, adapted to perform failure detection on the first transmitting entity;
a second sub-module, adapted to perform failure detection on the second transmitting entity;
a third sub-module, adapted to perform performance monitoring on the first transmitting entity;
a fourth sub-module, adapted to perform performance monitoring on the second transmitting entity; and
a fifth sub-module, adapted to make protection switching decision according to failure detection results of the first and second sub-modules and performance monitoring results of the third and fourth sub-modules.

15. The system of claim 14, wherein the fourth sub-module comprises:
a first unit, adapted to perform performance monitoring on the second transmitting entity through test packets when the second transmitting entity transmits test packets.

16. The system of claim 14, wherein the fourth sub-module comprises:
a second unit, adapted to perform performance monitoring on the second transmitting entity through continuity check packets when the second transmitting entity transmits continuity check packets.

17. The system of claim 14, wherein the fourth sub-module comprises:
a third unit, adapted to obtain a path of the second transmitting entity, perform performance monitoring on an equivalent transmitting entity that has a same path as the second transmitting entity, obtain a performance monitoring result, and use the performance monitoring result as that of the second transmitting entity.

18. The system of any one of claims 13 to 17, wherein the first transmitting entity is a working transmitting entity, the second transmitting entity is a protection transmitting entity, and services are switched from the working transmitting entity to the protection transmitting entity.

19. The system of any one of claims 13 to 17, wherein the first transmitting entity is a protection transmitting entity, the second transmitting entity is a working transmitting entity, and services are switched from the protection transmitting entity to the working transmitting entity.
